# EUROPEAN PATENT APPLICATION

(11) **EP 3 247 152 A1**
(43) Date of publication of application: **22.11.2017**
(21) Application number: 17153162.7
(22) Date of filing: 26.01.2017
(51) Int. Cl.: H04W 48/08, H04W 48/16, H04W 48/14

(54) **METHOD AND APPARATUS FOR ACCESSING WIRELESS NETWORK**

(30) Priority: 19.05.2016 CN 201610338997
(71) Applicant: Beijing Xiaomi Mobile Software Co., Ltd., Beijing 100085 (CN)
(72) Inventor: FU, Qiang, BEIJING, 100085 (CN); ZHOU, Shiquan, BEIJING, 100085 (CN); HOU, Enxing, BEIJING, 100085 (CN)
(74) Representative: Underwood, Nicolas Patrick

(57) **Abstract**

The present invention relates to a method and apparatus for accessing a wireless network, the method including: receiving (101, 201) a first broadcast message sent by a WIFI device intending to access the wireless network; generating (102, 202) prompt information according to the first broadcast message, wherein the prompt information is configured for prompting a user that the WIFI device requests to access the wireless network; and when feedback information inputted by the user according to the prompt information is detected, sending (103) a request message to a wireless router, wherein the request message is configured for instructing the wireless router to broadcast a second broadcast message carrying preset accessing information.

## Description

### TECHNICAL FIELD

The present invention generally relates to technical field of wireless network, and more particularly, to a method and apparatus for accessing a wireless network.

### BACKGROUND

With the popularization of the wireless network, Wireless Fidelity (WIFI) becomes more and more important. Since some WIFI devices (such as WIFI smart sockets, and WIFI smart bulbs) lack a valid input interface, when the WIFI device accesses a local area network provided by a wireless router for the first time, a user cannot directly operate on the WIFI device to control the WIFI device to access a designated wireless router. In addition, if the WIFI device can only operate in one frequency band, and the wireless router to be accessed is a dual-band router, a condition in which the WIFI device cannot receive messages broadcasted by the dual-band router may occur, which results in the WIFI device not successfully accessing the wireless network, and the user experience is poor.

### SUMMARY

In order to overcome the problems existing in the related art, embodiments of the present invention provide a method and apparatus for accessing a wireless network, so as to enable a WIFI device intending to access the wireless network, which lacks a valid input interface, to access the wireless network.

According to a first aspect of the embodiments of the present invention, there is provided a method for accessing a wireless network, which is performed by a mobile device. The method may include:
receiving a first broadcast message sent by a WIFI device intending to access the wireless network;
generating prompt information according to the first broadcast message, wherein the prompt information is configured for prompting a user that the WIFI device requests to access the wireless network; and
when feedback information inputted by the user according to the prompt information is detected, sending a request message to a wireless router, wherein the request message is configured for instructing the wireless router to broadcast a second broadcast message carrying preset accessing information.

In an embodiment, the method may further include:
receiving an operation triggered by the user via a physical keyboard according to the prompt information, or an operation triggered on a user interface of the mobile device via a touch screen; and
generating the feedback information according to the operation.

In an embodiment, the generating the prompt information according to the first broadcast message may include:
when the first broadcast message indicates that the WIFI device needs to access the wireless network, generating the prompt information; and
pushing out the prompt information.

In an embodiment, the pushing out the prompt information may include:
when the prompt information is text prompt information, displaying the prompt information;
when the prompt information is sound prompt information, playing the sound prompt information;
when the prompt information is light prompt information, emitting a light signal of a preset type; and
when the prompt information is vibration prompt information, issuing a vibration instruction according to a preset frequency.

In an embodiment, the method may further include:
determining whether the mobile device has accessed the wireless router; and
when the mobile device has not accessed the wireless router, controlling the mobile device to access the wireless router, and performing the step of sending the request message to the wireless router.

According to a second aspect of the embodiments of the present invention, there is provided a method for accessing a wireless network, which is performed by a wireless router. The method may include:
receiving a request message sent by a mobile device;
generating a second broadcast message according to the request message, wherein the second broadcast message carries therein preset accessing information for accessing the wireless router; and
sending the second broadcast message based on a preset sending frequency band, so as to enable a WIFI device intending to access the wireless network to access the wireless router according to the preset accessing information carried in the second broadcast message.

In an embodiment, sending the second broadcast message based on more than two preset sending frequency bands may include:
determining an operating frequency band compatible by the wireless router as the preset sending frequency band; and
sending the second broadcast message based on the preset sending frequency band.

In an embodiment, the method may further include:
receiving an accessing request message sent by the WIFI device, wherein the accessing request message carries therein the preset accessing information; and
assigning an IP address to the WIFI device for enabling the WIFI device to access the wireless network according to the IP address.

According to a third aspect of the embodiments of the present invention, there is provided an apparatus for accessing a wireless network, the apparatus being a mobile device. The apparatus may include:
a first receiving module configured to receive a first broadcast message sent by a WIFI device intending to access the wireless network;
a prompt module configured to generate prompt information according to the first broadcast message received by the first receiving module, wherein the prompt information is configured for prompting a user that the WIFI device requests to access the wireless network; and
a first sending module configured to, when feedback information inputted by the user according to the prompt information generated by the prompt module is detected, send a request message to a wireless router, wherein the request message is configured for instructing the wireless router to broadcast a second broadcast message carrying preset accessing information.

In an embodiment, the apparatus may further include:
a second receiving module configured to receive an operation triggered by the user via a physical keyboard according to the prompt information, or an operation triggered on a user interface of the mobile device via a touch screen; and
a feedback module configured to generate the feedback information according to the operation received by the second receiving module.

In an embodiment, the prompt module may include:
a generating submodule configured to, when the first broadcast message received by the first receiving module indicates that the WIFI device needs to access the wireless network, generate the prompt information; and
a push-out submodule configured to push out the prompt information generated by the generating submodule.

In an embodiment, the push-out submodule may include:
a display submodule configured to, when the prompt information generated by the generating submodule is text prompt information, display the prompt information;
a playing submodule configured to, when the prompt information generated by the generating submodule is sound prompt information, play the sound prompt information;
an emitting submodule configured to, when the prompt information generated by the generating submodule is light prompt information, emit a light signal of a preset type; and
a vibration submodule configured to, when the prompt information generated by the generating submodule is vibration prompt information, issue a vibration instruction according to a preset frequency.

In an embodiment, the apparatus may further include:
a determining module configured to determine whether the mobile device has accessed the wireless router; and
a network access module configured to, when the determining module determines that the mobile device has not accessed the wireless router, control the mobile device to access the wireless router, and the first sending module performs the step of sending the request message to the wireless router.

According to a fourth aspect of the embodiments of the present invention, there is provided an apparatus for accessing a wireless network, in the apparatus being a wireless router. The apparatus may include:
a third receiving module configured to receive a request message sent by a mobile device;
a broadcasting module configured to generate a second broadcast message according to the request message received by the third receiving module, wherein the second broadcast message carries therein preset accessing information for accessing the wireless router; and
a second sending module configured to send the second broadcast message generated by the broadcasting module based on a preset sending frequency band, so as to enable a WIFI device intending to access the wireless network to access the wireless router according to the preset accessing information carried in the second broadcast message, wherein more than two preset sending frequencies are located in different operating frequency bands.

In an embodiment, the second sending module may include:
a frequency-band determining submodule configured to determine an operating frequency band compatible by the wireless router as the preset sending frequency band; and
a sending submodule configured to send the second broadcast message based on the preset sending frequency band determined by the frequency-band determining submodule.

In an embodiment, the apparatus may further include:
a fourth receiving module configured to receive an accessing request message sent by the WIFI device, wherein the accessing request message carries therein the preset accessing information carried in the second broadcast message generated by the broadcasting module; and
an address assigning module configured to assign an IP address to the WIFI device for enabling the WIFI device to access the wireless network according to the IP address.

According to a fifth aspect of the embodiments of the present invention, there is provided an apparatus for accessing a wireless network, in the apparatus being a mobile device. The apparatus may include:
a processor; and
a memory for storing instructions executable by the processor;
wherein the processor is configured to:
receive a first broadcast message sent by a WIFI device intending to access the wireless network;
generate prompt information according to the first broadcast message, wherein the prompt information is configured for prompting a user that the WIFI device requests to access the wireless network; and
when feedback information inputted by the user according to the prompt information is detected, send a request message to a wireless router, wherein the request message is configured for instructing the wireless router to broadcast a second broadcast message carrying preset accessing information.

According to a sixth aspect of the embodiments of the present invention, there is provided an apparatus for accessing a wireless network, in the apparatus being a wireless router. The apparatus may include:
a processor; and
a memory for storing instructions executable by the processor;
wherein the processor is configured to:
receive a request message sent by a mobile device;
generate a second broadcast message according to the request message, wherein the second broadcast message carries therein preset accessing information for accessing the wireless router; and
send the second broadcast message based on a preset sending frequency band, so as to enable a WIFI device intending to access the wireless network to access the wireless router according to the preset accessing information carried in the second broadcast message.

The present invention also provides a computer program, which when executing on a processor of a mobile device, performs the above method (which is performed by a mobile device).

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The present invention also provides a computer program, which when executing on a processor of a wireless router, performs the above method (which is performed by a wireless router).

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the information medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may have the following beneficial effects: after receiving the first broadcast message sent by the WIFI device intending to access the wireless network via a built-in WIFI chip, the mobile device may generate the prompt information for prompting the user that the WIFI device wants to access the wireless network at present, and when the feedback information inputted by the user according to the prompt information is detected, the mobile device may send a request message to the wireless router to request the wireless router to send the second broadcast message carrying the preset accessing information, then the wireless router may send the second broadcast message based on the preset sending frequency band, and when the WIFI device receives the second broadcast message, the WIFI device may access the wireless router according to the preset accessing information, such that the WIFI device accesses the wireless network with the help of the mobile device, without the problem of the WIFI device having no valid input interface and not being able to access a designated wireless router. In addition, since the wireless router may send the second broadcast message based on the preset sending frequency band, the problem of the WIFI device which can only operate at one frequency band and may not receive the broadcast message sent by the dual-band router, and thus cannot access the wireless router, is solved.

Furthermore, by generating and pushing out various types of prompt information, the user can handle the prompt information in time, thereby the efficiency of accessing the wireless network by the WIFI device is improved, and the user experience is optimized.

By determining the operating frequency band compatible by the wireless router as the preset sending frequency band, the wireless router can send the second broadcast message based on all the compatible operating frequency bands, thereby avoiding the following problem: the WIFI device only supporting one operating frequency band cannot access the wireless router when the wireless router sends the second broadcast message only based on a sending frequency band different from the operating frequency band of the WIFI device. For example, if the WIFI device can only operate at the operating frequency band of 2.4 G, and the operating frequency bands compatible by the wireless router are 2.4G and 5G, the wireless router can send the second broadcast message based on both the 2.4G operating frequency band and the 5G operating frequency band at the same time, then when receiving the second broadcast message of 2.4G, the WIFI device may access the wireless router according to the second broadcast message.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart showing a method for accessing a wireless network, according to an exemplary embodiment.
Fig. 1B is an application scenarios view of a method for accessing a wireless network, according to an exemplary embodiment.
Fig. 2A is a flow chart showing a method for accessing a wireless network, according to a first exemplary embodiment.
Fig. 2B is a flow chart showing that a mobile device accesses a wireless router, according to a first exemplary embodiment.
Fig. 3 is a flow chart showing a method for accessing a wireless network, according to a second exemplary embodiment.
Fig. 4 is a flow chart showing a method for accessing a wireless network, according to a third exemplary embodiment.
Fig. 5 is a block diagram illustrating an apparatus for accessing a wireless network, according to an exemplary embodiment.
Fig. 6 is a block diagram illustrating another apparatus for accessing a wireless network, according to an exemplary embodiment.
Fig. 7 is a block diagram illustrating further another apparatus for accessing a wireless network, according to an exemplary embodiment.
Fig. 8 is a block diagram illustrating still another apparatus for accessing a wireless network, according to an exemplary embodiment.
Fig. 9 is a block diagram illustrating an apparatus adapted for accessing a wireless network, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

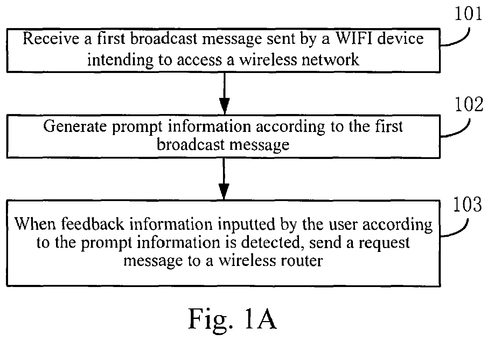

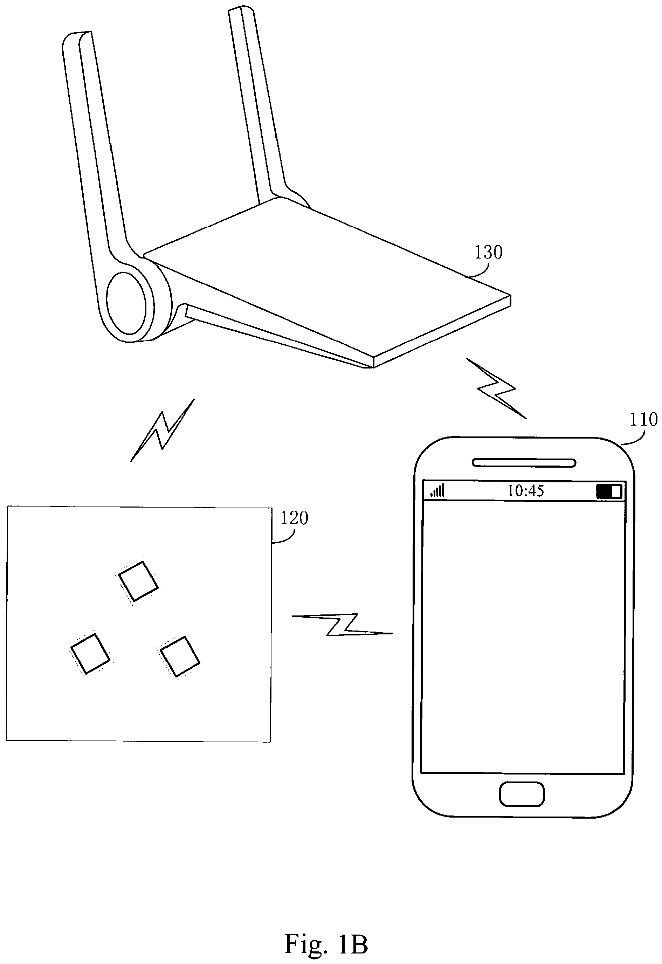

Fig. 1A is a flow chart showing a method for accessing a wireless network, according to an exemplary embodiment. Fig. 1B is an application scenarios view of a method for accessing a wireless network, according to an exemplary embodiment. The method for accessing a wireless network may be performed by a mobile device (such as a smart phone, and a tablet computer). As shown in Fig. 1A, the method for accessing a wireless network may include the following steps.

In step 101, a first broadcast message sent by a WIFI device intending to access a wireless network (WIFI device) is received.

In an embodiment, the WIFI device may send the first broadcast message via a built-in WIFI chip.

In an embodiment, the WIFI device may be a smart socket, a smart bulb, and the like.

In an embodiment, the WIFI device may only support one operating frequency band, or may support more than one operating frequency bands.

In step 102, prompt information is generated according to the first broadcast message.

In an embodiment, the prompt information is configured for prompting a user that the WIFI device requests to access the wireless network.

In an embodiment, the prompt information may be text prompt information; in another embodiment, the prompt information may be sound prompt information; in further another embodiment, the prompt information may be light prompt information; in still another embodiment, the prompt information may be vibration prompt information; in still further another embodiment, the prompt information may be prompt information of a combination of any two or more of the text prompt information, the sound prompt information, the light prompt information, and the vibration prompt information.

In step 103, when feedback information inputted by the user according to the prompt information is detected, a request message is sent to a wireless router.

In an embodiment, the request message is configured for instructing the wireless router to broadcast a second broadcast message carrying preset accessing information.

In an embodiment, the preset accessing information may be a Service Set Identifier (SSID) of the wireless router and a user password for accessing the wireless router. For example, the SSID is guangbo, and the user password is 1368316.

As shown in Fig. 1B, an illustrative explanation will be given by using a smart switch as the WIFI device 120 intending to access the wireless network. When receiving a first broadcast message sent by the WIFI device 120, the mobile device 110 may determine a wireless router 130 which the WIFI device 120 wants to access according to an operation triggered by the user, and send a request message to the wireless router 130 to request the wireless router 130 to send a second broadcast message carrying preset accessing information therein, such as the SSID and the user password of the wireless router, then the wireless router 130 may send a second broadcast message based on all the compatible operating frequency bands, thereby the WIFI device 120 may receive the second broadcast message of the operating frequency band compatible by the WIFI device 120 itself, and then request to access the wireless router 130 according to the preset accessing information.

In the present embodiment, after receiving a first broadcast message sent by a WIFI chip built in the WIFI device, the mobile device may generate prompt information for prompting the user that the WIFI device wants to access the wireless network at present. If feedback information inputted by the user according to the prompt information is detected, the mobile device may send a request message to the wireless router to request the wireless router to send a second broadcast message carrying preset accessing information, such that the WIFI device can access the wireless network with the help of the mobile device, and the problem that the WIFI device lacking a valid input interface cannot access a designated wireless router is avoided.

In an embodiment, the method may further include:
receiving an operation triggered by the user via a physical keyboard according to the prompt information, or an operation triggered on a user interface of the mobile device via a touch screen; and
generating feedback information according to the operation.

In an embodiment, generating the prompt information according to the first broadcast message may include:
when the first broadcast message indicates that the WIFI device needs to access the wireless network, generating the prompt information; and
pushing out the prompt information.

In an embodiment, pushing out the prompt information may include:
if the prompt information is text prompt information, displaying the prompt information;
if the prompt information is sound prompt information, playing the sound prompt information;
if the prompt information is light prompt information, emitting a light signal of a preset type; and
if the prompt information is vibration prompt information, issuing a vibration instruction according to a preset frequency.

In an embodiment, the method may further include:
controlling the mobile device to access the wireless router, and performing the step of sending the request message to the wireless router.

As to how to access the wireless network, the following embodiments may be referred to.

So far, the above-mentioned methods provided by the embodiments of the present disclosure may enable the mobile device to help the WIFI device lacking a valid input interface to access a designated wireless router, and optimize the user experience.

Hereinafter, the technical solutions provided by the embodiments of the present disclosure will be explained by using the embodiments.

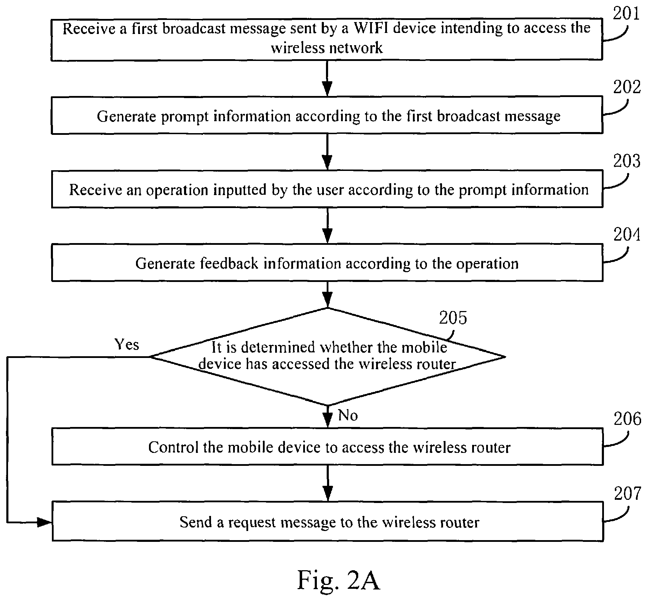

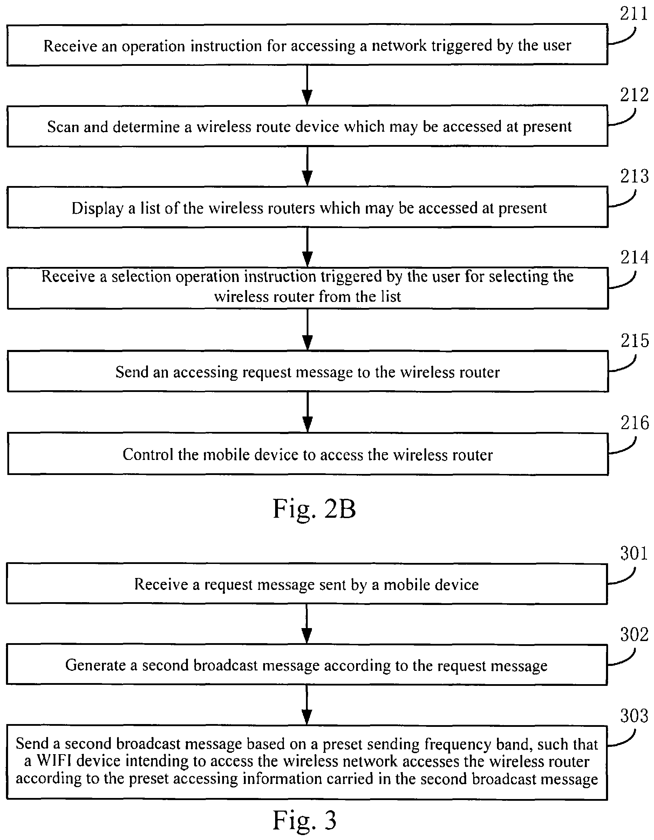

Fig. 2A is a flow chart showing a method for accessing a wireless network, according to a first exemplary embodiment, and Fig. 2B is a flow chart showing that a mobile device accesses a wireless router, according to a first exemplary embodiment. The present embodiment utilizes the above-mentioned method provided by the embodiments of the present disclosure, and the illustrative explanations are given by using an example in which the mobile device assists the WIFI device only supporting 2.4G frequency band to access the wireless router compatible with 2.4G and 5G operating frequency bands. As shown in Fig. 2A, the method may include the following steps.

In step 201, a first broadcast message sent by a WIFI device intending to access the wireless network is received.

The related description of the step 201 may refer to the description of the step 101 in the embodiment shown in Fig. 1A.

In step 202, prompt information is generated according to the first broadcast message.

In an embodiment, the prompt information is configured for prompting a user that the WIFI device requests to access the wireless network.

In an embodiment, when the prompt information is text prompt information, the prompt information is displayed, for example, text information "The smart bulb is not connected to a wireless network yet, please determine whether to assist the smart bulb to connect to the wireless network." may be displayed on a display interface; when the prompt information is sound prompt information, the sound prompt information may be played, for example, text voice information may be played, or a music prompt voice may be played; when the prompt information is light prompt information, a light signal of a preset type is emitted, for example, a bright light signal is emitted, or a flashing light signal is emitted; when the prompt information is vibration prompt information, a vibration instruction is issued according to a preset frequency, for example, a vibration is issued for 1 second every 0.5 second, or a vibration is issued for 2 seconds every 1 second.

In step 203, an operation inputted by the user according to the prompt information is received.

In an embodiment, the mobile device may receive an operation triggered by the user via a physical keyboard.

In another embodiment, the mobile device may receive an operation triggered on a user interface of the mobile device via a touch screen by the user.

In step 204, feedback information is generated according to the operation.

After receiving the operation triggered by the user, the mobile device may generate corresponding feedback information, for example, the user interface of the mobile device displays prompt information "The smart bulb is not connected to a wireless network yet, please determine whether to assist the smart bulb to connect to the wireless network.". When it is detected that the user clicks a "YES" button via a touch screen, the mobile device may generate feedback information "Assist the smart device to access the wireless network" according to the operation of clicking the "YES" button by the user.

In step 205, it is determined whether the mobile device has accessed the wireless router, if the mobile device has not accessed the wireless router, step 206 is performed; and if the mobile device has accessed the wireless router, step 207 is performed.

In the step 206, the mobile device is controlled to access the wireless router, and then the step 207 is performed.

In an embodiment, the detailed description of the step 206 may refer to Fig. 2B. As shown in Fig. 2B, the step may include the following steps.

In step 211, an operation instruction for accessing a network triggered by the user is received.

In step 212, a wireless route device which may be accessed at present is scanned and determined.

In step 213, a list of the wireless router which may be accessed at present is displayed.

In step 214, a selection operation instruction triggered by the user for selecting the wireless router from the list is received.

In an embodiment, the wireless route device displayed in the list may include the wireless route device within a preset distance from the mobile device, and the user may select the wireless router which the WIFI device may access.

In step 215, an accessing request message is sent to the wireless router.

In an embodiment, the accessing request message carries therein preset accessing information.

In an embodiment, the preset accessing information may include a SSID number and a user password of the wireless router.

In step 216, the wireless router is accessed according to an IP address assigned by the wireless router.

In an embodiment, after receiving the accessing request message sent by the mobile device, if it is determined that the preset accessing information is correct, the wireless router may assign an IP address in an IP address pool to the mobile device, and then the mobile device may access the wireless router according to the IP address.

In step 207, a request message is sent to the wireless router.

In an embodiment, the request message is configured for instructing the wireless router to broadcast a second broadcast message carrying preset accessing information.

On the basis of the advantageous effects of the above embodiments, in the present embodiment, the prompt information generated by the mobile device after receiving the first broadcast message sent by the WIFI chip built in the WIFI device may be prompt information of a combination of any one or more of text prompt information, sound prompt information, light prompt information, and vibration prompt information, such that the user may handle the prompt information timely, thereby improving the efficiency of accessing the wireless network by the WIFI device, and optimizing the user experience.

Fig. 3 is a flow chart showing a method for accessing a wireless network, according to a second exemplary embodiment. This embodiment may be performed by a wireless router, and the wireless router may be a mono-band router, or a dual-band router, or a multi-band router. In the present embodiment, combining with the application scenario of Fig. 1B, the illustrative explanations are given by using an example that the WIFI device accesses a wireless router. As shown in Fig. 3, the method includes the following steps.

In step 301, a request message sent by a mobile device is received.

In an embodiment, the request message is configured for instructing the wireless router to broadcast a second broadcast message carrying therein preset accessing information.

In step 302, a second broadcast message is generated according to the request message.

In an embodiment, the second broadcast message carries therein preset accessing information.

In an embodiment, the preset accessing information may be a Service Set Identifier (SSID) of the wireless router and a user password for accessing the wireless router. For example, the SSID is guangbo, and the user password is 1368316.

In step 303, a second broadcast message is sent based on a preset sending frequency band, such that a WIFI device intending to access the wireless network accesses the wireless router according to the preset accessing information carried in the second broadcast message.

In an embodiment, after generating the second broadcast message, the wireless router may send the second broadcast message based on all the operating frequency bands compatible by the wireless router itself, and various WIFI devices may access the wireless router according to the received broadcast message.

For example, most of low-end WIFI devices only support 2.4G operating frequency band currently. If the operating frequency bands compatible by the dual-band router include a 2.4G operating frequency band and a 5G operating frequency band, then the wireless router may send the second broadcast message based on the 2.4G operating frequency band and the 5G operating frequency band at the same time, the WIFI device only supporting the 2.4G operating frequency band may receive the broadcast message sent by the wireless router based on the 2.4G operating frequency band, the WIFI device only supporting the 5G operating frequency band may receive the broadcast message sent by the wireless router based on the 5G operating frequency band, and the WIFI device compatible with the 2.4G operating frequency band and the 5G operating frequency band may randomly receive the broadcast message sent by the wireless router based on the 5G operating frequency band. Thereby, if the operating frequency band of the WIFI device is contained in the operating frequency band compatible by the wireless router, the WIFI device may receive the message broadcasted by the wireless router, and then access the wireless router.

As shown in Fig. 1B, after receiving a request message sent by the mobile device 110, the wireless router 130 may generate a second broadcast message, and send the second broadcast message based on all the compatible operating frequency bands. If the operating frequency band of the WIFI device 120 is contained in the operating frequency bands compatible by the wireless router 130, the WIFI device 120 may receive the second broadcast message sent by the wireless router 130, and then request to access the wireless router 130 according to preset accessing information.

In the present embodiment, the wireless router may send the second broadcast message based on the preset sending frequency band, which solves the problem that the WIFI device only operating at one frequency band may not receive the broadcast message sent by the dual-band router, and thus cannot access the wireless router.

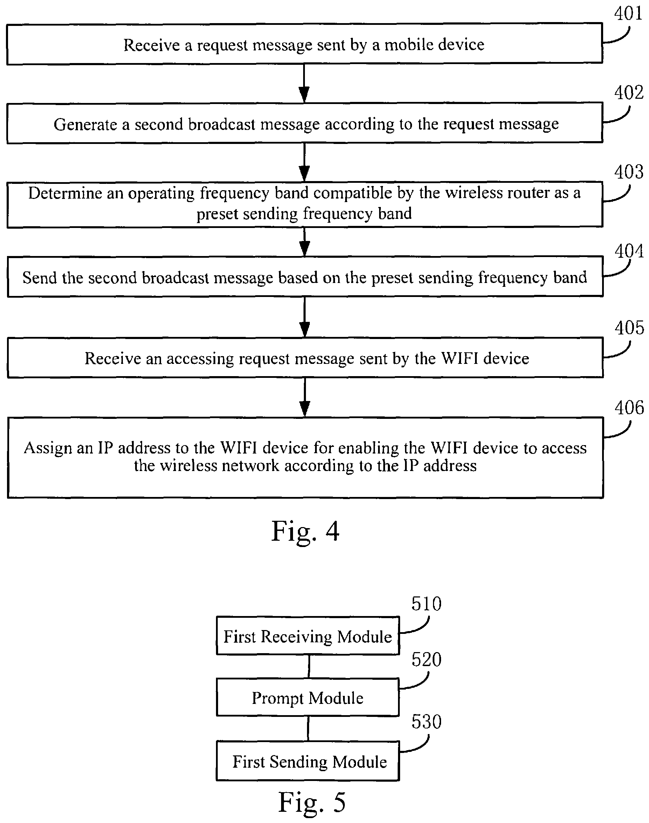

Fig. 4 is a flow chart showing a method for accessing a wireless network, according to a third exemplary embodiment. In the present embodiment, the above methods provided by the embodiments of the present disclosure may be utilized, and the illustrative explanations are given by using an example in which the wireless router sends a second broadcast message to make the WIFI device access the wireless router. As shown in Fig. 4, the method includes the following steps.

In step 401, a request message sent by a mobile device is received.

In step 402, a second broadcast message is generated according to the request message.

In an embodiment, the second broadcast message carries therein preset accessing information for accessing the wireless router.

In step 403, an operating frequency band compatible by the wireless router is determined as a preset sending frequency band.

For example, if the wireless router is compatible with a 2.4G operating frequency band and a 5G operating frequency band, then the preset sending frequency band includes the 2.4G operating frequency band and the 5G operating frequency band.

In step 404, the second broadcast message is sent based on the preset sending frequency band.

In an embodiment, if the wireless router is compatible with the 2.4G operating frequency band and the 5G operating frequency band, then the second broadcast message may be sent based on the 2.4G operating frequency band and the 5G operating frequency band at the same time, and the preset accessing information carried in the broadcast message are the same. For example, the SSID is guangbo, and the user password is 1368316.

In step 405, an accessing request message sent by the WIFI device is received.

In an embodiment, after receiving the second broadcast message sent by the wireless router, the WIFI device parses the message and sends an accessing request message to the wireless router according to the preset accessing information carried in the broadcast message.

In step 406, an IP address is assigned to the WIFI device for enabling the WIFI device to access the wireless network according to the IP address.

In an embodiment, if it is determined that the accessing request message sent by the WIFI device is matched with local preset accessing information, the wireless router may assign an IP address to the WIFI device, and then the WIFI device may access the wireless network according to the IP address.

In the present embodiment, by determining the operating frequency band compatible by the wireless router as the preset sending frequency band, the wireless router can send the second broadcast message based on all the compatible operating frequency bands, thereby avoiding the problem that as for the WIFI device only supporting one operating frequency band, when the wireless router sends the second broadcast message only based on a sending frequency band different from the operating frequency band of the WIFI device, the WIFI device cannot access the wireless router.

Corresponding to the embodiments of the above methods for accessing a wireless network, the present disclosure also provides embodiments of an apparatus for accessing a wireless network.

Fig. 5 is a block diagram illustrating an apparatus for accessing a wireless network, according to an exemplary embodiment, wherein the apparatus is a mobile device. As shown in Fig. 5, the apparatus for accessing a wireless network includes: a first receiving module 510, a prompt module 520, and a first sending module 530.

The first receiving module 510 is configured to receive a first broadcast message sent by a WIFI device intending to access the wireless network.

The prompt module 520 is configured to generate prompt information according to the first broadcast message received by the first receiving module 510, wherein the prompt information is configured for prompting a user that the WIFI device requests to access the wireless network.

The first sending module 530 is configured to, if feedback information inputted by the user according to the prompt information generated by the prompt module 520 is detected, send a request message to a wireless router, wherein the request message is configured for instructing the wireless router to broadcast a second broadcast message carrying preset accessing information.

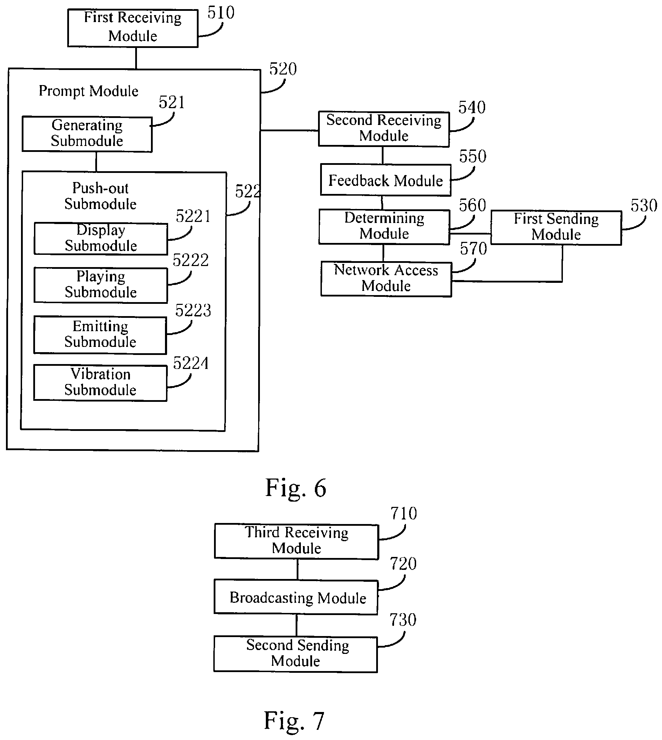

Fig. 6 is a block diagram illustrating another apparatus for accessing a wireless network, according to an exemplary embodiment. As shown in Fig. 6, based on the embodiment shown in Fig. 5, in an embodiment, the apparatus may further include: a second receiving module 540, and a feedback module 550.

The second receiving module 540 is configured to receive an operation triggered by the user via a physical keyboard according to the prompt information, or an operation triggered on a user interface of the mobile device via a touch screen.

The feedback module 550 is configured to generate the feedback information according to the operation received by the second receiving module 540.

In an embodiment, the prompt module 520 may include: a generating submodule 521, and a push-out submodule 522.

The generating submodule 521 is configured to, when the first broadcast message received by the first receiving module indicates that the WIFI device needs to access the wireless network, generate the prompt information.

The push-out submodule 522 is configured to push out the prompt information generated by the generating submodule 521.

In an embodiment, the push-out submodule 522 may include: a display submodule 5221, a playing submodule 5222, an emitting submodule 5223, and a vibration submodule 5224.

The display submodule 5221 is configured to, if the prompt information generated by the generating submodule 521 is text prompt information, display the prompt information.

The playing submodule 5222 is configured to, if the prompt information generated by the generating submodule 521 is sound prompt information, play the sound prompt information.

The emitting submodule 5223 is configured to, if the prompt information generated by the generating submodule 521 is light prompt information, emit a light signal of a preset type.

The vibration submodule 5224 is configured to, if the prompt information generated by the generating submodule 521 is vibration prompt information, issue a vibration instruction according to a preset frequency.

In an embodiment, the apparatus may further include: a determining module 560, and a network access module 570.

The determining module 560 is configured to determine whether the mobile device has accessed the wireless router.

The network access module 570 is configured to, if the determining module 560 determines that the mobile device has not accessed the wireless router, control the mobile device to access the wireless router, and the first sending module performs the step of sending the request message to the wireless router.

Fig. 7 is a block diagram illustrating further another apparatus for accessing a wireless network, according to an exemplary embodiment. The apparatus is a wireless router. As shown in Fig. 7, the apparatus for accessing a wireless network includes: a third receiving module 710, a broadcasting module 720, and a second sending module 730.

The third receiving module 710 is configured to receive a request message sent by a mobile device.

The broadcasting module 720 is configured to generate a second broadcast message according to the request message received by the third receiving module 710, wherein the second broadcast message carries therein preset accessing information for accessing the wireless router.

The second sending module 730 is configured to send the second broadcast message generated by the broadcasting module 720 based on a preset sending frequency band, such that a WIFI device intending to access the wireless network accesses the wireless router according to the preset accessing information carried in the second broadcast message, wherein more than two preset sending frequencies are located in different operating frequency bands.

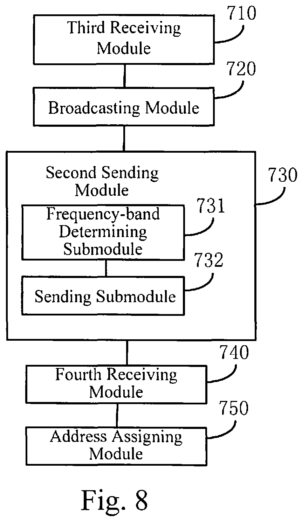

Fig. 8 is a block diagram illustrating still another apparatus for accessing a wireless network, according to an exemplary embodiment. As shown in Fig. 8, on the basis of the above embodiment shown in Fig. 7, in an embodiment, the second sending module 730 may include: a frequency-band determining submodule 731, and a sending submodule 732.

The frequency-band determining submodule 731 is configured to determine an operating frequency band compatible by the wireless router as the preset sending frequency band.

The sending submodule 732 is configured to send the second broadcast message based on the preset sending frequency band determined by the frequency-band determining submodule 731.

In an embodiment, the apparatus may further include: a fourth receiving module 740, and an address assigning module 750.

The fourth receiving module 740 is configured to receive an accessing request message sent by the WIFI device, wherein the accessing request message carries therein the preset accessing information carried in the second broadcast message generated by the broadcasting module.

The address assigning module 750 is configured to assign an IP address to the WIFI device for enabling the WIFI device to access the wireless network according to the IP address.

Implementation of the functions and operations of the units in the above devices can be specifically referred to the implementation of the corresponding steps in the above methods, which will not be elaborated herein.

For device embodiments, since they are substantially corresponding to the method embodiments, the relevant contents may be referred to some explanations in the method embodiments. The above-described device embodiments are only illustrative. The units illustrated as separate components may be or may not be separated physically, the component illustrated as a unit may be or may not be a physical unit, i.e., may be located at one location, or may be distributed into multiple network units. A part or all of the modules may be selected to achieve the purpose of the solution in the present disclosure according to actual requirements. The person skilled in the art can understand and implement the present disclosure without paying inventive labor.

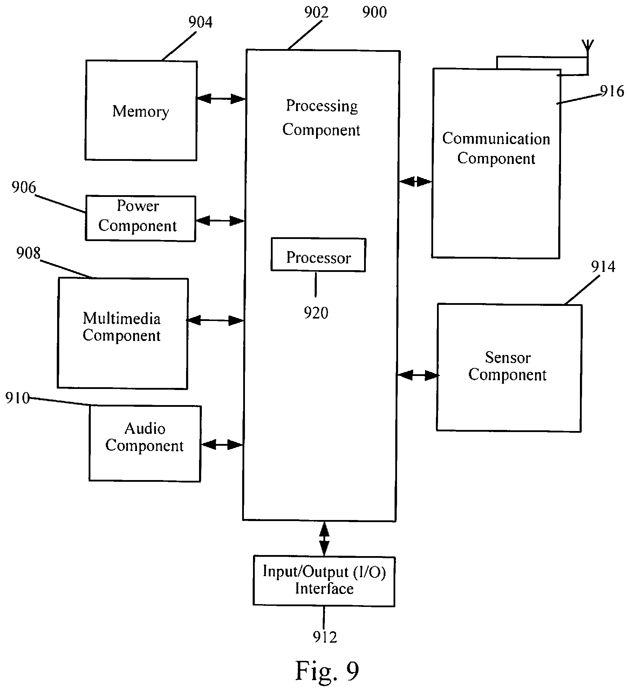

Fig. 9 is a block diagram illustrating an apparatus adapted for accessing a wireless network, according to an exemplary embodiment. For example, the device 900 may be a mobile device, such as a mobile phone, and a tablet computer.

Referring to Fig. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, messages, pictures, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a distance sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

The structure suitable for the wireless router may refer to the block diagram shown in Fig. 9 and the corresponding description, which are not elaborated herein.

## Claims

1. A method for accessing a wireless network, being performed by a mobile device, and comprising:
receiving (101, 201) a first broadcast message sent by a WIFI device intending to access the wireless network;
generating (102, 202) prompt information according to the first broadcast message, wherein the prompt information is configured for prompting a user that the WIFI device requests to access the wireless network; and
when feedback information inputted by the user according to the prompt information is detected, sending (103) a request message to a wireless router, wherein the request message is configured for instructing the wireless router to broadcast a second broadcast message carrying preset accessing information.

2. The method of claim 1, further comprising:
receiving (203) an operation triggered by the user via a physical keyboard according to the prompt information, or an operation triggered on a user interface of the mobile device via a touch screen; and
generating (204) the feedback information according to the operation.

3. The method of claim 1, wherein generating (102, 202) the prompt information according to the first broadcast message comprises:
when the first broadcast message indicates that the WIFI device needs to access the wireless network, generating the prompt information; and
pushing out the prompt information.

4. The method of claim 3, wherein pushing out the prompt information comprises:
when the prompt information is text prompt information, displaying the prompt information;
when the prompt information is sound prompt information, playing the sound prompt information;
when the prompt information is light prompt information, emitting a light signal of a preset type; and
when the prompt information is vibration prompt information, issuing a vibration instruction according to a preset frequency.

5. The method of claim 1, further comprising:
determining (205) whether the mobile device has accessed the wireless router; and
when the mobile device has not accessed the wireless router, controlling (206) the mobile device to access the wireless router, and performing the step of sending the request message to the wireless router.

6. An apparatus for accessing a wireless network, the apparatus being a mobile device, and comprising:
a first receiving module (510) configured to receive a first broadcast message sent by a WIFI device intending to access the wireless network;
a prompt module (520) configured to generate prompt information according to the first broadcast message received by the first receiving module (510), wherein the prompt information is configured for prompting a user that the WIFI device requests to access the wireless network; and
a first sending module (530) configured to, when feedback information inputted by the user according to the prompt information generated by the prompt module (520) is detected, send a request message to a wireless router, wherein the request message is configured for instructing the wireless router to broadcast a second broadcast message carrying preset accessing information.

7. The apparatus of claim 6, further comprising:
a second receiving module (540) configured to receive an operation triggered by the user via a physical keyboard according to the prompt information, or an operation triggered on a user interface of the mobile device via a touch screen; and
a feedback module (550) configured to generate the feedback information according to the operation received by the second receiving module (540).

8. The apparatus of claim 6, wherein the prompt module (520) comprises:
a generating submodule (521) configured to, when the first broadcast message received by the first receiving module (510) indicates that the WIFI device needs to access the wireless network, generate the prompt information; and
a push-out submodule (522) configured to push out the prompt information generated by the generating submodule.

9. The apparatus of claim 8, wherein the push-out submodule (522) comprises:
a display submodule (5221) configured to, when the prompt information generated by the generating submodule (521) is text prompt information, display the prompt information;
a playing submodule (5222) configured to, when the prompt information generated by the generating submodule (521) is sound prompt information, play the sound prompt information;
an emitting submodule (5223) configured to, when the prompt information generated by the generating submodule (521) is light prompt information, emit a light signal of a preset type; and
a vibration submodule (5224) configured to, when the prompt information generated by the generating submodule (521) is vibration prompt information, issue a vibration instruction according to a preset frequency.

10. The apparatus of claim 6, further comprising:
a determining module (560) configured to determine whether the mobile device has accessed the wireless router; and
a network access module (570) configured to, when the determining module (560) determines that the mobile device has not accessed the wireless router, control the mobile device to access the wireless router, and the first sending module (530) performs the step of sending the request message to the wireless router.

11. An apparatus for accessing a wireless network, the apparatus being wireless router, and comprising:
a third receiving module (710) configured to receive a request message sent by a mobile device;
a broadcasting module (720) configured to generate a second broadcast message according to the request message received by the third receiving module (710), wherein the second broadcast message carries therein preset accessing information for accessing the wireless router; and
a second sending module (730) configured to send the second broadcast message generated by the broadcasting module (720) based on more than two preset sending frequency bands, so as to enable a WIFI device intending to access the wireless network to access the wireless router according to the preset accessing information carried in the second broadcast message, wherein the more than two preset sending frequency bands are located in different operating frequency bands.

12. The apparatus of claim 11, wherein the second sending module (730) comprises:
a frequency-band determining submodule (731) configured to determine an operating frequency band compatible by the wireless router as the preset sending frequency band; and
a sending submodule (732) configured to send the second broadcast message based on the preset sending frequency band determined by the frequency-band determining submodule.

13. The apparatus of claim 11, further comprising:
a fourth receiving module (740) configured to receive an accessing request message sent by the WIFI device, wherein the accessing request message carries therein the preset accessing information carried in the second broadcast message generated by the broadcasting module; and
an address assigning module (750) configured to assign an IP address to the WIFI device for enabling the WIFI device to access the wireless network according to the IP address.
